# EUROPÄISCHE PATENTSCHRIFT

(11) **EP 1 745 229 B1**
(45) Veröffentlichungstag und Bekanntmachung des Hinweises auf die Patenterteilung: **16.04.2008**
(21) Anmeldenummer: 05742248.7
(22) Anmeldetag: 06.05.2005
(51) Int. Cl.: F16H 61/44, F16H 61/42, F16H 59/40, F16H 47/02

(54) **ANTRIEB FÜR EIN MOBILFAHRZEUG**
DRIVE UNIT FOR A MOBILE VEHICLE
MECANISME D'ENTRAINEMENT POUR VEHICULE MOBILE

(30) Priorität: 10.05.2004 DE 102004023629
(43) Veröffentlichungstag der Anmeldung: 24.01.2007
(73) Patentinhaber: ZF FRIEDRICHSHAFEN AG, 88038 Friedrichshafen (DE)
(72) Erfinder: LEGNER, Jürgen, 88048 Friedrichshafen (DE)
(86) Internationale Anmeldenummer: PCT/EP2005/004936
(87) Internationale Veröffentlichungsnummer: WO 2005/111476

(56) Entgegenhaltungen:
- EP-A- 0 282 010
- EP-A- 0 561 430
- EP-A- 0 615 077
- DE-A1- 19 957 791
- FR-A- 1 321 351

## Beschreibung

Die Erfindung betrifft einen Antrieb für ein Mobilfahrzeug nach der im Oberbegriff von Anspruch 1 näher definierten Art., wie aus der FR 13 21 351 A bekannt.

Gattungsgemäße Antriebe werden insbesondere zum Antrieb von Mobilfahrzeugen, wie beispielsweise Arbeitsmaschinen, wie Radlader, verwendet. Radlader benötigen bei niedriger Geschwindigkeit hohe Zugkräfte und vorzugsweise eine Endgeschwindigkeit von 40 km/h. In einem ersten Fahrbereich, dem Arbeitsbereich, sind Schaltungen hinderlich, da diese Schaltungen zeitintensiv sind und sich somit das Arbeitsspiel verlängert.

Die DE 39 07 633 C2 offenbart einen stufenlos regelbaren, hydrostatischen Fahrantrieb, bei welchem ein erster Hydromotor über ein erstes Getriebeteil eine Abtriebswelle und ein zweiter Hydromotor über ein zweites Getriebeteil ebenfalls diese Abtriebswelle antreibt. In einem ersten Fahrbereich sind beide Getriebeteile mit der Abtriebswelle verbunden, so dass das Drehmoment beider Hydromotore auf die Abtriebswelle wirkt. Durch Verändern des Hubvolumens eines Hydromotors kann die Abtriebsdrehzahl zusätzlich zur Veränderung des Hubvolumens der Pumpe verändert werden. Dies ist jedoch nur bis zu einer maximalen Drehzahl eines der Hydromotore möglich. Aus diesem Grund befindet sich zwischen dem Untersetzungsgetriebeteil des zweiten Motors eine mechanische Trenneinrichtung, welche bei Erreichen der maximalen Drehzahl des Hydromotors diesen von der Abtriebswelle trennt, so dass der andere Hydromotor bis zu seiner maximalen Drehzahl weiter beschleunigt werden kann. Bevor die Trenneinrichtung geöffnet werden kann, muß der Motor auf ein Hubvolumen von nahe Null verstellt werden. Das Ein- oder Auskuppeln dieses Motors führt jedoch zu einem Schaltruck.

Der vorliegenden Erfindung liegt die Aufgabe zugrunde, einen Antrieb für ein Mobilfahrzeug zu schaffen, bei welchem in einem ersten Fahrbereich das Drehmoment von zwei Hydromotoren auf die Abtriebswelle wirkt und bei welchem in einem weiteren Fahrbereich das Drehmoment nur eines Hydromotors auf die Abtriebswelle wirkt, wobei der Schaltruck zu minimieren ist und das Getriebe einfach aufgebaut sein soll.

Die Erfindung wird mit einem, auch die kennzeichnenden Merkmale des Hauptanspruchs aufweisenden, gattungsgemäßen Antrieb für Mobilfahrzeuge gelöst.

Erfindungsgemäß sind ein erster hydraulischer Motor über ein erstes Untersetzungsgetriebeteil und ein weiterer Hydromotor ebenfalls über ein weiteres Untersetzungsgetriebeteil dauerhaft mit der Abtriebswelle verbunden. Die Übersetzungen der Getriebeteile können gleich sein, vorzugsweise sind die Übersetzungen unterschiedlich.

In einer weiteren Ausgestaltungsform besteht das erste Untersetzungsgetriebeteil, welches mit dem ersten Hydromotor verbunden ist, aus einem Stirnradgetriebe, wobei die Abtriebswelle des Hydromotors ein erstes Stirnrad antreibt, welches mit einem zweiten Stirnrad in Wirkverbindung ist, welches drehfest mit der Abtriebswelle verbunden ist. Der zweite Hydromotor treibt das zweite Untersetzungsgetriebeteil an, welches ebenfalls aus einem ersten Stirnrad besteht, welches mit einem weiteren Stirnrad in Wirkverbindung steht, welches drehfest mit der Abtriebswelle verbunden ist. Es besteht auch die Möglichkeit, dass der erste Hydromotor ein erstes Stirnrad antreibt und der zweite Hydromotor ebenfalls ein Stirnrad antreibt, wobei beide Stimräder mit einem gemeinsamen Stirnrad in Wirkverbindung stehen, welches mit der Abtriebswelle drehfest verbunden ist. Mindestens ein Hydromotor ist in seinem Hubvolumen verstellbar ausgeführt, vorzugsweise sind jedoch beide Hydromotore in ihrem Hubvolumen verstellbar. Um mit einem hohen Drehmoment anzufahren, sind die Druckmittelzuführungen beider Hydromotore mit dem Druckmittelausgang einer Pumpe verbunden und die Hydromotore weisen ein Hubvolumen auf, welches größer Null ist. Wird nun das Fördervolumen der Pumpe erhöht, so werden die Motore angetrieben, welche wiederum über ihre Untersetzungsgetriebeteile die Abtriebswelle antreiben. Die Abtriebswelle steht mit einem Fahrzeugrad in Verbindung, welches somit ebenfalls angetrieben wird. Ist das maximale Födervolumen der Pumpe erreicht, wird mindestens ein Hydromotor in seinem Hubvolumen so verstellt, dass sich die Drehzahl der Abtriebswelle weiter erhöht. Dieser Motor und das Untersetzungsgetriebeteil sind vorzugsweise so ausgelegt, dass dieser Motor bei Erreichen seines minimalen Hubvolumens seine maximal zulässige Drehzahl bei Beaufschlagung der Druckmittelzuführung mit Hochdruck erreicht. Dieser Hydromotor wird nun auf sein Hubvolumen Null gestellt und die Druckmittelzuführung wird vom Hochdruck der Pumpe, dem Druckmittelausgang, getrennt. Die Druckmittelzuführung und die Druckmittelrückführung dieses Hydromotors werden mit dem Druck der Saugseite der Hydropumpe bzw. bei geschlossenem Kreis mit dem Druck der Speisepumpe bzw. mit dem Rücklaufdruck vom Kühler zum Getriebe (Tank), dem Schmierdruck für das Getriebe, verbunden. Indem der Rücklaufdruck vom Kühler mit dem Motor verbunden wird, sind die Lagerstellen und Dichtungen des Motors noch geringer belastet, da dieser Druck unterhalb dem Speisedruck liegt. Durch Reduzierung des Hubvolumens des anderen Motors wird die Abtriebswelle in ihrer Drehzahl weiter erhöht, wodurch sich auch die Drehzahl des ersten Hydromotors über seine maximal zulässige Drehzahl erhöht. Der erste Hydromotor kann jedoch oberhalb seiner maximal zulässigen Drehzahl betrieben werden, da er nahezu kein Hubvolumen aufweist, indem die Hubvolumen-Verstelleinrichtung das Hubvolumen auf Null gestellt hat, und der Hochdruck nicht mehr auf der Druckmittelzuführung anliegt. Vorzugsweise ist der Hydromotor als Radialkolbenmotor ausgeführt, wodurch durch die Verstellung des Hubvolumens auf Null keinerlei Relativbewegung zwischen den Kolben und den Zylindern entsteht und somit der Motor geringe Reibung aufweist. Bei Verwendung eines Radialkolbenmotors mit Kurbelwelle ist die Hubraumverstellung innerhalb der Kurbelwelle angeordnet, wie beispielsweise in der WO 99117021, welche hiermit vollständig mitumfaßt sein soll, wodurch bei Verstellung des Hydromotors auf Hubvolumen Null die Kurbelwelle konzentrisch umläuft und somit die Kolben keinerlei Hubbewegung ausführen. Die in der WO 99/17021 gezeigte mechanische Hubraumverstellung kann auch hydraulisch erfolgen, indem die Verstellkolben über hydraulischen Druck verstellt werden. Vorzugsweise sind diese Verstellkolben mit dem Hochdruck verbindbar, wodurch die Verstellung über den Hochdruck erfolgt. Es besteht jedoch auch die Möglichkeit, die Hydromotore als Axialkolbenmotore oder den ersten Hydromotor als Radialkolbenmotor und den zweiten Hydromotor als Axialkolbenmotor auszubilden. Bei der maximalen Drehzahl der Abtriebswelle ist somit der erste Motor vom Hochdruck getrennt, jedoch mechanisch mit der Abtriebswelle verbunden und auf seinem Hubvolumen Null. Der zweite Motor ist auf sein minimales Hubvolumen verstellt und treibt die Abtriebswelle an. Die Hydromotore und die Untersetzung sind so ausgelegt, dass der Arbeitsbereich der Arbeitsmaschine dann erreicht ist, wenn die maximal zulässige Drehzahl des ersten Hydromotors erreicht ist. Der Fahrbereich erfolgt somit ausschließlich über den zweiten Hydromotor.

Es ist für den Fachmann selbstverständlich, dass bei Veränderung der Förderrichtung der Pumpe sich die Druckmittelzuführung und Druckmittelrückführung der Hydromotore umdreht, da die Druckmittelrückführung nun mit Hochdruck beaufschlagt ist und die Druckmittelzuführung mit Niederdruck. Bei Abschalten des Hydromotors wird jedoch immer die Hochdruck führende Leitung mit dem Niederdruck oder dem Rücklaufdruck vom Kühler zum Tank (Getriebe), dem Schmierdruck, beaufschlagt und vom Hochdruck getrennt.

In einer weiteren Ausgestaltungsform ist die Verstelleinrichtung des Hubvolumens über ein Ventil mit dem Abschaltventil verbunden, wodurch bei Trennung der Druckmittelzuführung vom Hochdruck automatisch die Verstelleinrichtung für das Hubvolumen des Motors vom Hochdruck getrennt wird und mit Niederdruck beaufschlagt ist. Es ist somit ausgeschlossen, dass im abgetrennten Zustand die Verstelleinrichtung den Hydromotor in Richtung größeres Hubvolumen verstellt.

Indem die Motore nicht auf der Abtriebswelle angeordnet sind, ist es möglich, die Druckmittelzuführung zur Verstellung des Hubvolumens auf einer Seite der Kurbelwelle in der Kurbelwelle anzuordnen und mit dem Hochdruck zu verbinden. Die Abdichtung kann somit auf einem geringen Durchmesser angeordnet sein, wodurch auch bei höheren Drücken höhere Drehzahlen möglich sind

Indem der erste Hydromotor und der zweite Hydromotor in dauernder mechanischer Wirkverbindung mit der Abtriebswelle stehen und bei einer maximalen Drehzahl der Abtriebswelle ein Hydromotor auf Hubvolumen Null verstellt ist und seine Druckmittelzuführung und seine Druckmittelrückführung mit dem Niederdruck verbunden sind, benötigt das Antriebssystem keinerlei mechanische Trenneinrichtungen, wodurch kein Schaltstoß entstehen kann. Indem die Motore auch im abgeschalteten Zustand mit Druckmittel versorgt werden, bleiben die Zylinder gefüllt, wodurch ebenfalls beim Zuschalten kein Schaltstoß entsteht.

Weitere Merkmale sind der Figuren-Beschreibung zu entnehmen.

Es zeigen:
- Fig. 1: ein Hydraulik- und Getriebeschema des Antriebs;
- Fig. 2: ein Diagramm des Hubvolumens über der Abtriebsdrehzahl bzw. der Geschwindigkeit und
- Fig. 3: ein Diagramm der Drehzahl über der Abtriebsdrehzahl bzw. der Fahrzeuggeschwindigkeit.

### Fig. 1:

Eine hydrostatische Pumpe 1, welche in ihrem Hubvolumen veränderbar ist, welche vorzugsweise eine elektronische, drehzahlabhängige Verstellung aufweist, fördert Druckmittel in die gemeinsame Hochdruckleitung 2 und saugt aus der gemeinsamen Niederdruckleitung 3. Eine Speisepumpe 4 saugt über einen Filter 5 aus einem Druckmittelreservoir 6, welches vorzugsweise das Getriebegehäuse ist, und fördert einerseits in die gemeinsame Niederdruckleitung 3 und andererseits in die Speisedruckleitung 7. Die gemeinsame Hochdruckleitung 2 ist über ein erstes Abschaltventil 8 mit dem ersten Hydromotor 9 und mit dem zweiten Hydromotor 10 verbunden. Die gemeinsame Niederdruckleitung 3 ist über das Abschaltventil 8 mit dem ersten Hydromotor 9 und mit dem zweiten Hydromotor 10 verbunden. Der erste Hydromotor 9 ist in seinem Hubvolumen verstellbar und treibt ein erstes Zahnrad 11 eines ersten Untersetzungsgetriebeteils 12 an, und der zweite Hydromotor 10 treibt ein erstes Zahnrad 13 eines zweiten Untersetzungsgetriebeteils 14 an. Das erste Zahnrad 11 treibt ein zweites Zahnrad 15 und das erste Zahnrad 13 treibt ein zweites Zahnrad 16 an, wobei das zweite Zahnrad 15 und das zweite Zahnrad 16 drehfest mit der Abtriebswelle 17 verbunden sind. Die Abtriebswelle 17 steht mit einem Fahrzeugrad in Verbindung. Das Ventil 8 weist zwei Schaltstellungen auf, wobei in einer ersten Schaltstellung die gemeinsame Hochdruckleitung 2 mit der Druckmittelzuführung 18 und die Druckmittelrückführung 19 mit der gemeinsamen Niederdruckleitung 3 verbunden sind. In der zweiten Schaltstellung des Ventils 8 sind die gemeinsame Hochdruckleitung 2 von der Druckmittelzuführung 18 und die gemeinsame Niederdruckleitung 3 ebenfalls von der Druckmittelrückführung 19 getrennt. Die Druckmittelzuführung 18 und die Druckmittelrückführung 19 sind mit der Speisedruckleitung 7 verbunden. Es besteht auch die Möglichkeit, die Leitung 20 mit dem Ausgang des Spülventils 21 zu verbinden, wodurch die Druckmittelzuführung 18 und die Druckmittelrückführung 19 ebenfalls mit dem Druck der Speisepumpe 4 beaufschlagt werden, jedoch erhält der Motor in dieser Schaltstellung das heiße Öl, welches das Spülventil 21 verläßt. Indem die Leitung 20 mit der Leitung 7 verbunden ist, erhält der Motor in dieser Schaltstellung das kühle Öl der Speisepumpe 4. Eine weitere Möglichkeit ist, die Leitung 20 mit der Rücklaufleitung 57 vom Kühler 56 zum Tank 6 zu verbinden, wodurch die Druckmittelzuführung 18 und die Druckmittelrückführung 19 mit einem sehr niedrigen Druck beaufschlagt werden. Das Ventil 22 versorgt die Hubvolumen-Verstelleinrichtung 23 immer mit Hochdruck, indem das Ventil 22 die Leitung 24 entweder mit der Leitung 25 oder der Leitung 26 verbindet. Das Ventil 22 ist zwischen dem Ventil 8 und dem ersten Hydromotor 9 angeordnet, wodurch automatisch durch Schalten des Ventils 8 in die erste Schaltstellung die Hubvolumen-Verstelleinrichtung 23 mit Hochdruck und beim Schalten des Ventils 8 in seine zweite Schaltstellung die Hubvolumen-Verstelleinrichtung 23 automatisch mit Niederdruck beaufschlagt werden. Somit ist gewährleistet, dass in der zweiten Schaltstellung des Ventils 8 der erste Hydromotor 9 nicht in seinem Hubvolumen verstellt werden kann. Das Ventil 27 versorgt die Hubvolumen-Verstelleinrrichtung 28 wie das Ventil 22 mit Hochdruck. Die Ventile 29 und 30 sind als Proportionalventile ausgeführt und mit einer elektronischen Steuereinheit verbunden, wodurch die Verstelleinrichtungen 28 und 23, welche mit den Ventilen 29 und 30 verbunden sind, angesteuert werden können, wodurch das Hubvolumen der Hydromotore 9 und 10 geregelt werden kann. Das Ventil 31 ist ebenfalls mit der elektronischen Steuereinrichtung verbunden und betätigt das Ventl 8, um den ersten Hydromotor 9 hydraulisch vom Hochdruck abzukoppeln.

Um mit dem Antrieb anzufahren, befindet sich das Ventil 8 in seiner ersten Schaltstellung, wodurch die gemeinsame Hochdruckleitung 2 mit der Druckmittelzuführung 18 verbunden ist, und das Hubvolumen der Pumpe 1 wird vergrößert, wodurch sich beim ersten Hydromotor 9 und beim zweiten Hydromotor 10 ein Drehmoment aufbaut und die Abtriebswelle 17 über den ersten Getriebeteil 12 und den zweiten Getriebeteil 14 angetrieben wird. Durch weiteres Erhöhen des Hubvolumens der Pumpe 1 beschleunigt sich die Abtriebswelle 17 in ihrer Drehzahl, wodurch das Fahrzeug an Geschwindigkeit zunimmt. Anschließend wird das Hubvolumen mindestens eines Motors, des ersten Motors oder des zweiten Motors oder beider Motoren, reduziert, wodurch die Drehzahl der Abtriebswelle 17 weiter zunimmt. Bei Erreichen der maximal zulässigen Drehzahl des ersten Motors 9 wird der erste Motor 9 auf Hubvolumen Null verstellt und das Ventil 31 von der elektronischen Steuereinheit beaufschlagt, so dass das Ventil 8 in seine zweite Schaltstellung umgeschaltet und die Druckmittelzuführung 18 von der gemeinsamen Hochdruckleitung 2 getrennt wird. Gleichzeitig wird auch die Verstelleinrichtung 23 über das Ventil 22 vom Hochdruck getrennt. Da der erste Hydromotor 9 bei dieser Drehzahl das Hubvolumen Null aufweist und auf den ersten Hydromotor 9 keinerlei Kräfte aus dem Hochdruck wirken, ist es möglich, den ersten Hydromotor 9 über seine maximal zulässige Drehzahl weiter zu beschleunigen. Dies geschieht dadurch, dass der zweite Hydromotor 10 ebenfalls weiter in seinem Hubvolumen reduziert wird, bis der zweite Hydromotor 10 sein minimales Hubvolumen erreicht. Bei maximaler Fördermenge der Pumpe 1 und minimalem Hubvolumen des zweiten Motors 10 sowie über das Ventil abgeschaltetem ersten Hydromotor 9 wird die maximale Drehzahl der Abtriebswelle 17 erreicht. Bei Verwendung eines Radialkolben-Hydromotors mit Kurbelwelle und hydraulischer Verstellung in der Kurbelwelle dreht sich die Kurbelwelle koaxial bei maximaler Drehzahl, wodurch die Kolben keinerlei Hub in den Zylindern ausführen. Auch die Lagerkräfte des Hydromotors sind stark reduziert, da der Hydromotor nicht mit dem Hochdruck beaufschlagt ist. Es ist somit nicht notwendig, den Hydromotor mechanisch von der Abtriebswelle 17 abzukoppeln. Die Ventile 31 und 8 sind so geschaltet, dass in stromlosem Zustand der erste Hydromotor 9 von der gemeinsamen Hochdruckleiturig 2 abgekoppelt ist. Die Übersetzung des ersten Untersetzungsgetriebeteils 12 und die Übersetzung des zweiten Untersetzungsgetriebeteils 14 sind so ausgelegt, dass am Ende des Arbeitsbereichs eines Radladers der erste Hydromotor 9 seine maximal zulässige Drehzahl erreicht und über das Ventil 8 abgekoppelt wird.

### Fig. 2:

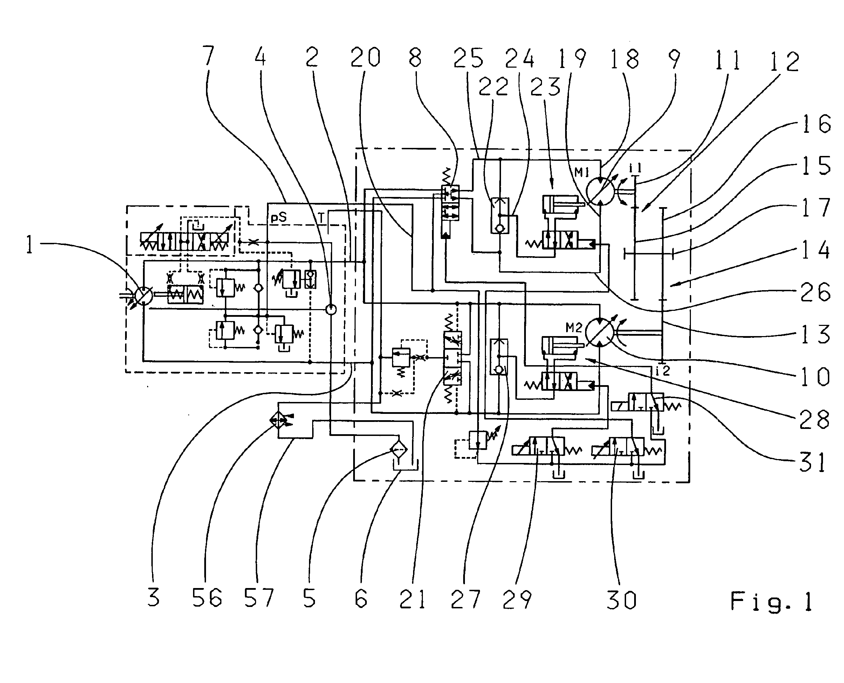

Auf der Abszisse 32 ist die Fahrzeuggeschwindigkeit bzw. die Drehzahl der Abtriebswelle 17 der Fig. 1 dargestellt und auf der Ordinate 33 sind die Hubvolumen der Pumpe 1 des ersten Motors 9 und des zweiten Motors 10 der Fig. 1 dargestellt. Im Ursprung 34 befindet sich das Fahrzeug im Stillstand. Der erste Motor 9 befindet sich auf seinem maximalen Hubvolumen, welches mit der Linie 35 dargestellt ist. Der zweite Motor 10 befindet sich ebenfalls auf seinem maximalen Hubvolumen, welches mit der Linie 36 dargestellt ist. Durch Vergrößern des Hubvolumens der Pumpe 1 beschleunigt sich das Fahrzeug bzw. die Abtriebswelle 17, was mit der Linie 37 dargestellt ist. Im Punkt 38 weist die Pumpe 1 ihr maximales Hubvolumen auf, welches bei der weiteren Betrachtung nicht verändert wird, was an der Linie 39 zu sehen ist. Ab dem Punkt 40 wird das Hubvolumen des ersten Motors verringert, was mit der Linie 41 dargestellt ist. Dadurch beschleunigt das Fahrzeug weiter. Ab dem Punkt 42 wird das Hubvolumen des zweiten Motors 10 ebenfalls reduziert, was in der Linie 43 dargestellt ist, wodurch das Fahrzeug weiter beschleunigt. Beim Punkt 44 ist das Hubvolumen des ersten Motors auf Null verstellt und der Motor wird über das Ventil 8 der Fig. 1 vom Hochdruck getrennt. Vorzugsweise entspricht die Drehzahl im Punkt 44 der maximalen zulässigen Drehzahl des ersten Hydromotors 9. Ab dem Punkt 45 wird der zweite Motor 10 allein in seinem Hubvolumen reduziert, wodurch die Fahrzeuggeschwindigkeit weiter zunimmt, was an der Linie 46 zu sehen ist. Im Punkt 47 ist die maximale Geschwindigkeit des Fahrzeugs erreicht und der zweite Motor 10 befindet sich auf seinem minimalen Schluckvolumen. Die Drehzahl des ersten Motors 9 befindet sich im Punkt 47 oberhalb seiner maximal zulässigen Drehzahl. Die maximal zulässige Drehzahl ist jedoch bei Druckbeaufschlagung des Hydromotors mit Hochdruck definiert, wodurch der Hydromotor durch seine hydraulische Abschaltung und das Verstellen des Hydromotors auf Null-Schluckvolumen über seine maximal zulässige Drehzahl beschleunigt werden kann.

### Fig. 3:

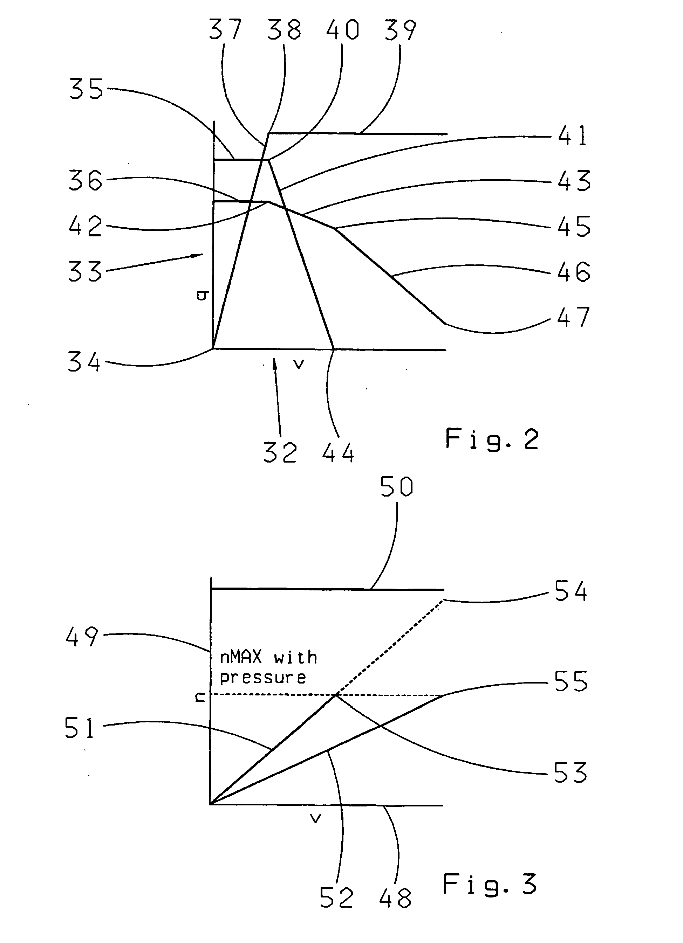

Auf der Abszisse 48 ist ebenfalls die Geschwindigkeit bzw. die Drehzahl der Abtriebswelle 17, wie in Fig. 2, dargestellt. Auf der Ordinate 49 sind die Drehzahlen der Pumpe 1 des ersten Motors 9 und des zweiten Motors 10 dargestellt. Die Pumpe 1 wird mit maximaler Drehzahl angetrieben, was der Linie 50 entnommen werden kann. Der erste Hydromotor 9 erhöht sich in seiner Drehzahl durch Veränderung der Schluckvolumen, wie in Fig. 2 dargestellt, was in der Linie 51 dargestellt ist. Der zweite Motor 10 erhöht sich in seiner Drehzahl durch Veränderung der Hubvolumen, wie in Fig. 2 dargestellt, wodurch sich die Fahrgeschwindigkeit des Fahrzeugs erhöht, wie in der Linie 52 dargestellt. Die unterschiedlichen Steigungen der Linie 51 und 52 resultieren aus den unterschiedlichen Übersetzungen des ersten Getriebeteils 12 und des zweiten Getriebeteils 14. Im Punkt 53 hat der erste Motor 9 seine maximale Drehzahl erreicht, was in Fig. 2 dem Punkt 44 entspricht. Oberhalb des Punkts 53 wird der Hydromotor 9 mit Hubvolumen Null und abgeschaltetem Hochdruck betrieben. Die Drehzahlen des ersten Hydromotors 9 und des zweiten Hydromotors 10 nehmen jedoch bis zur maximalen Abtriebsdrehzahl der Abtriebswelle 17 weiter zu, wobei die Punkte 54 und 55 die Drehzahl bei maximaler Abtriebsgeschwindigkeit darstellen.

### Bezugszeichen

- 1: Pumpe
- 2: gemeinsame Hochdruckleitung
- 3: gemeinsame Niederdruckleitung
- 4: Speisepumpe
- 5: Filter
- 6: Druckmittelreservoir
- 7: Speisedruckleitung
- 8: erstes Abschaltventil
- 9: erster Hydromotor
- 10: zweiter Hydromotor
- 11: erstes Zahnrad
- 12: erster Untersetzungsgetriebeteil
- 13: erstes Zahnrad
- 14: zweiter Untersetzungsgetriebeteil
- 15: zweites Zahnrad
- 16: zweites Zahnrad
- 17: Abtriebswelle
- 18: Druckmittelzuführung
- 19: Druckmittelrückführung
- 20: Leitung
- 21: Spülventil
- 22: Ventil
- 23: Hubvolumen-Verstelleinrichtung
- 24: Leitung
- 25: Leitung
- 26: Leitung
- 27: Ventil
- 28: Hubvolumen-Verstelleinrichtung
- 29: Ventil
- 30: Ventil
- 31: Ventil
- 32: Abszisse
- 33: Ordinate
- 34: Ursprung
- 35: Linie
- 36: Llinie
- 37: Linie
- 38: Punkt
- 39: Linie
- 40: Punkt
- 41: Linie
- 42: Punkt
- 43: Linie
- 44: Punkt
- 45: Punkt
- 46: Linie
- 47: Punkt
- 48: Abszisse
- 49: Ordinate
- 50: Linie
- 51: Linie
- 52: Linie
- 53: Punkt
- 54: Punkt
- 55: Punkt
- 56: Kühler
- 57: Leitung

## Patentansprüche

1. Antrieb für ein Mobilfahrzeug mit zwei hydraulischen Motoren (9, 10), wobei mindestens ein Motor in seinem Hubvolumen verstellbar ausgeführt ist, und beide Hydromotore in dauerhafter Wirkverbindung mit einer Abtriebswelle (17) stehen, wobei die Hydromotore (9, 10) mit einer gemeinsamen Hochdruckleitung (2) verbunden sind, wobei mindestens ein Hydromotor (9) in seinem Hubvolumen auf nahezu kein Hubvolumen verstellbar ausgeführt ist und dieser Hydromotor (9) von der gemeinsamen Hochdruckleitung (2) abkoppelbar ist, **dadurch gekennzeichnet, dass** dieser Hydromotor (9) als Radialkolbenmotor ausgeführt ist, wodurch bei Verstellung auf Hubvolumen Null keine Relativbewegung zwischen den Kolben und den Zylindern dieses Hydromotors (9) entsteht und das Hubvolumen hydraulisch verstellbar ist.

2. Antrieb für ein Mobilfahrzeug nach Anspruch 1, **dadurch gekennzeichnet, dass** der erste Hydromotor (9) über ein erstes Untersetzungsgetriebeteil (12) und der zweite Hydromotor (10) über ein zweites Untersetzungsgetriebeteil (14) eine Antriebswelle (17) antreiben.

3. Antrieb für ein Mobilfahrzeug nach Anspruch 1, **dadurch gekennzeichnet, dass** der erste Hydromotor (9) oberhalb seiner zulässigen maximalen Drehzahl das Hubvolumen Null aufweist und von der gemeinsamen Hochdruckleitung (2) getrennt ist.

4. Antrieb für ein Mobilfahrzeug nach Anspruch 2, **dadurch gekennzeichnet, dass** die Übersetzung des ersten Getriebeteils (12) größer ist als die Untersetzung des zweiten Getriebeteils (14).

5. Antrieb für ein Mobilfahrzeug nach Anspruch 1, **dadurch gekennzeichnet, dass** ein Ventil (8) den ersten Hydromotor (9) von der gemeinsamen Hochdruckleitung (2) trennt und eine Druckmittelzuführung (18) und eine Druckmittelrückführung (19) des ersten Hydromotors (9) mit einer Leitung (20) verbindet, auf welche der Speisedruck einer Speisepumpe (4) wirkt.

6. Antrieb für ein Mobilfahrzeug nach Anspruch 2, **dadurch gekennzeichnet, dass** das erste Untersetzungsgetriebeteil (12) ein Stirnradgetriebe und das zweite Untersetzungsgetriebeteil (14) ein Stirnradgetriebe ist.

7. Antrieb für ein Mobilfahrzeug nach Anspruch 1, **dadurch gekennzeichnet, dass** bei der maximalen Abtriebsdrehzahl der Abtriebswelle (17) der erste Hydromotor (9) von der gemeinsamen Hochdruckleitung (2) getrennt und auf seinem Hubvolumen Null und der zweite Hydromotor (10) auf sein minimales Hubvolumen verstellt ist.

8. Antrieb für ein Mobilfahrzeug nach Anspruch 1, **dadurch gekennzeichnet, dass** der Antrieb in einer Arbeitsmaschine, insbesondere einem Radlader, verwendet wird.

9. Antrieb für ein Mobilfahrzeug nach Anspruch 1, **dadurch gekennzeichnet, dass** ein Ventil (8) den ersten Hydromotor (9) von der gemeinsamen Hochdruckleitung (2) trennt und eine Druckmittelzuführung (18) und eine Druckmittelrückführung (19) des ersten Hydromotors (9) mit einer Leitung (20) verbindet, auf welcher der Schmierdruck der Leitung (57) nach dem Kühler (56) wirkt.

## Claims

1. Drive for a mobile vehicle comprising two hydraulic motors (9, 10), wherein at least one motor is designed to be variable in its displacement, and both hydraulic motors are in permanent working connection with an output shaft (17), wherein the hydraulic motors (9, 10) are connected to a common high-pressure line (2), wherein at least one hydraulic motor (9) is designed to be variable in its displacement to almost no displacement and this hydraulic motor (9) is disconnectable from the common high-pressure line (2), **characterized in that** this hydraulic motor (9) takes the form of a radial piston motor, with the result that upon a variation to zero displacement no relative movement occurs between the pistons and the cylinders of this hydraulic motor (9) and the displacement is variable hydraulically.

2. Drive for a mobile vehicle according to claim 1, **characterized in that** the first hydraulic motor (9) via a first reduction gear part (12) and the second hydraulic motor (10) via a second reduction gear part (14) drive an output shaft (17).

3. Drive for a mobile vehicle according to claim 1, **characterized in that** the first hydraulic motor (9) above its allowable maximum rotational speed has the displacement zero and is separated from the common high-pressure line (2).

4. Drive for a mobile vehicle according to claim 2, **characterized in that** the ratio of the first gear part (12) is higher than the ratio of the second gear part (14) .

5. Drive for a mobile vehicle according to claim 1, **characterized in that** a valve (8) separates the first hydraulic motor (9) from the common high-pressure line (2) and connects a pressure medium supply line (18) and a pressure medium return line (19) of the first hydraulic motor (9) to a line (20), upon which the charge pressure of a supply pump (4) acts.

6. Drive for a mobile vehicle according to claim 2, **characterized in that** the first reduction gear part (12) is a spur gear drive and the second reduction gear part (14) is a spur gear drive.

7. Drive for a mobile vehicle according to claim 1, **characterized in that**, given the maximum output speed of the output shaft (17), the first hydraulic motor (9) is separated from the common high-pressure line (2) and set to its zero displacement and the second hydraulic motor (10) is set to its minimum displacement.

8. Drive for a mobile vehicle according to claim 1, **characterized in that** the drive is used in a construction machine, in particular a wheel loader.

9. Drive for a mobile vehicle according to claim 1, **characterized in that** a valve (8) separates the first hydraulic motor (9) from the common high-pressure line (2) and connects a pressure medium supply line (18) and a pressure medium return line (19) of the first hydraulic motor (9) to a line (20), upon which the lubrication pressure of the line (57) downstream of the cooler (56) acts.

## Revendications

1. Entraînement pour un véhicule mobile avec deux moteurs hydrauliques (9, 10), dans lequel au moins un moteur a une cylindrée réglable, et les deux moteurs sont en liaison fonctionnelle permanente avec un arbre de sortie (17), dans lequel les moteurs hydrauliques (9, 10) sont reliés avec une conduite de haute pression commune (2), dans lequel au moins un moteur hydraulique (9) peut être réglé à une cylindrée nulle et ce moteur hydraulique (9) peut être désaccouplé de la conduite de haute pression commune (2), **caractérisé en ce que** ce moteur hydraulique (9) est conçu sous la forme d'un moteur à pistons radiaux, aucun mouvement relatif entre les pistons et les cylindres de ce moteur hydraulique (9) n'étant provoqué lors du réglage à une cylindrée nulle et la cylindrée étant réglable hydrauliquement.

2. Entraînement pour un véhicule mobile selon la revendication 1, **caractérisé en ce que** le premier moteur hydraulique (9) entraîne un arbre de sortie (17) par l'intermédiaire d'une première partie de transmission de démultiplication (12) et le second moteur hydraulique (10) entraîne l'arbre de sortie (17) par l'intermédiaire d'une seconde partie de transmission de démultiplication (14).

3. Entraînement pour un véhicule mobile selon la revendication 1, **caractérisé en ce que** le premier moteur hydraulique (9), au-delà de sa vitesse de rotation maximale admissible, présente une cylindrée nulle et est séparé de la conduite de haute pression commune (2).

4. Entraînement pour un véhicule mobile selon la revendication 2, **caractérisé en ce que** la démultiplication de la première partie de transmission (12) est supérieure à la démultiplication de la seconde partie de transmission (14).

5. Entraînement pour un véhicule mobile selon la revendication 1,
**caractérisé en ce qu'**une soupape (8) sépare le premier moteur hydraulique (9) de la conduite de haute pression commune (2) et relie une alimentation en fluide sous pression (18) et un retour de fluide sous pression (19) du premier moteur hydraulique (9) à une conduite (20) sur laquelle s'exerce la pression d'alimentation d'une pompe d'alimentation (4).

6. Entraînement pour un véhicule mobile selon la revendication 2, **caractérisé en ce que** la première partie de transmission de démultiplication (12) est un engrenage à roues droites et la seconde partie de transmission de démultiplication (14) est également un engrenage à roues droites.

7. Entraînement pour un véhicule mobile selon la revendication 1, **caractérisé en ce que**, à la vitesse de rotation de sortie maximale de l'arbre de sortie (17), le premier moteur hydraulique (17) est séparé de la conduite de haute pression commune (2) et réglé à une cylindrée nulle et le second moteur hydraulique (10) est réglé à sa cylindrée minimale.

8. Entraînement pour un véhicule mobile selon la revendication 1, **caractérisé en ce que** l'entraînement est utilisé dans un engin de chantier, plus particulièrement une chargeuse à roues.

9. Entraînement pour un véhicule mobile selon la revendication 1, **caractérisé en ce qu**'une soupape (8) sépare le premier moteur hydraulique (9) de la conduite de haute pression commune (2) et relie une alimentation en fluide sous pression (18) et un retour de fluide sous pression (19) du premier moteur hydraulique (9) à une conduite (20) sur laquelle s'exerce la pression de lubrification de la conduite (57) après le refroidisseur (56).
